# FASCICULE DE BREVET EUROPEEN

(11) **EP 1 165 328 B1**
(45) Date de publication et mention de la délivrance du brevet: **04.12.2002**
(21) Numéro de dépôt: 00917121.6
(22) Date de dépôt: 05.04.2000
(51) Int. Cl.: B60C 19/00, F16F 15/32

(54) **DISPOSITIF D'EQUILIBRAGE POUR ROUE ET ROUE EQUILIBREE PAR COLLAGE D'UN TEL DISPOSITIF D'EQUILIBRAGE**
RADAUSGLEICHSVORRICHTUNG UND DAMIT AUSGEGLICHENES, GEKLEBTES RAD
WHEEL BALANCING DEVICE AND WHEEL BALANCED BY BONDING SUCH A BALANCING DEVICE

(30) Priorité: 08.04.1999 FR 9904402
(43) Date de publication de la demande: 02.01.2002
(73) Titulaire: Fonderie de Gentilly, 91130 Ris-Orangis (FR)
(72) Inventeur: LE MOAL, Gilles, F-78000 Versailles (FR)
(74) Mandataire: Rinuy, Santarelli
(86) Numéro de dépôt international: FR0000850
(87) Numéro de publication internationale: WO00061391

(56) Documents cités:
- EP-A- 0 222 391
- US-A- 1 692 145
- US-A- 2 245 355
- US-A- 3 786 850
- PATENT ABSTRACTS OF JAPAN vol. 007, no. 275 (M-261), 8 décembre 1983 (1983-12-08) & JP 58 152612 A (SUMITOMO GOMU KOGYO KK), 10 septembre 1983 (1983-09-10)

## Description

La présente invention concerne l'équilibrage de roues de véhicules munies de pneumatiques.

Lorsqu'il arrive que, pour un motif quelconque, la roue d'un véhicule se trouve déséquilibrée, le moyen le plus connu pour remédier à ce défaut est de placer sur la jante, en des emplacements judicieusement choisis, des plombs dont le poids et la position rétablissent l'équilibre défaillant. Cette technique a notamment l'inconvénient que les ressorts, qui assurent la solidarité entre chaque plomb et la jante, provoquent lors de leur mise en place des griffures locales permanentes sur la jante, de sorte que, lorsqu'à l'occasion d'un nouvel équilibrage il convient de remplacer les plombs, des marques laissées par ces ressorts restent apparentes, ce qui donne un aspect inesthétique à la jante. Il faut noter que ce principe n'est pas possible sur tous les types de jantes ; en effet les plombs d'équilibrage sont en pratique disposés sur des bords périphériques de la jante qui assurent une excellente retenue de ces plombs vis-à-vis de la force centrifuge, ce qui fait que les plombs classiques d'équilibrage ne peuvent pas être montés sur des roues dont les jantes ne sont pas munies de tels bords.

Il a déjà été proposé de fixer des éléments d'équilibrage sur le pneumatique (parfois sur la paroi interne de celui-ci) ainsi que le décrivent notamment les documents US-1 692 145 (WOLSON), US-3 786 850 (TUROCZI), WO87/07376 ou US-2 245 355. Toutefois, les solutions connues sont peu pratiques à mettre en oeuvre, impliquent des adaptations spécifiques des pneumatiques, manquent de discrétion, utilisent une pluralité d'éléments d'équilibrage pour chaque flanc du pneumatique et/ou comportent des éléments d'équilibrage de forme complexe. Il est à noter que plusieurs des solutions précitées ont été proposées pour l'équilibrage du seul pneumatique, indépendamment de la jante, ce qui correspond à une procédure d'équilibrage totalement abandonnée de nos jours.

L'invention a pour objet un dispositif d'équilibrage permettant de réaliser de façon rapide et aisée l'équilibrage d'une roue, quelles que soient les caractéristiques de la jante et sans nécessiter d'adaptation du pneumatique, qui soit avantageusement adapté à résister à des efforts mécaniques importants (aux effets centrifuges apparaissant lors d'une conduite à haute vitesse aussi bien qu'aux efforts générés lors, par exemple, du frottement contre un trottoir) et/ou thermiques, dont la présence puisse être très discrète.

L'invention propose à cet effet un dispositif d'équilibrage pour roue comportant une masse unique d'équilibrage, une portion de liaison en matière plastique solidaire de cette masse et adaptée à être solidarisée par collage à un pneumatique, et une portion externe solidaire de la masse et réalisée en un matériau ayant une couleur similaire à celle de ce pneumatique.

Elle propose de même une roue comportant une jante ayant un axe, un pneumatique et un dispositif d'équilibrage du type précité, comportant une masse unique d'équilibrage, une portion de liaison en matière plastique solidaire de cette masse et solidarisée par collage au pneumatique, et une portion externe réalisée en un matériau ayant une couleur similaire à celle de ce pneumatique.

On comprend aisément que, puisque le poids d'équilibrage est fixé par sa portion de liaison au pneumatique d'une roue, la mise en oeuvre du dispositif d'équilibrage ne dépend pas des caractéristiques de la jante. En outre, on peut utiliser pour le poids d'équilibrage un matériau différent de celui de la portion de liaison, donc d'une quelconque densité choisie, par exemple du plomb comme dans la procédure d'équilibrage connue, sans avoir à se préoccuper de sa liaison à la roue ; le nombre de dispositifs d'équilibrage à mettre en place lors de l'équilibrage d'une roue peut donc être aussi faible qu'avec des poids classiques en plomb.

La condition de choisir pour la portion externe un matériau ayant sensiblement la même couleur que le pneumatique ne pose en pratique aucun problème (il suffit de choisir pour la portion la portion externe un matériau colorable).

La portion de liaison peut faire partie intégrante de la masse d'équilibrage. De manière avantageuse, il en est de même de la portion externe. Le dispositif d'équilibrage peut alors être monobloc, ce qui correspond à une structure particulièrement simple. Le matériau constitutif peut être tout simplement une matière plastique thermoplastique. Les terpolymères du type ABS (acrylo butyl styrène) sont apparus tout à fait performants (résistance au choc et à la chaleur notamment), et faciles à obtenir dans les coloris connus pour les pneumatiques (en particulier : noir, blanc et vert). En variante, il peut s'agir d'une matière plastique thermodurcissable.

Il faut bien noter que la portion de liaison d'une part, et la portion externe d'autre part peuvent être choisies, par rapport à la masse d'équilibrage, indépendamment l'une de l'autre.

La portion de liaison peut ainsi être distincte de la masse d'équilibrage, par exemple constituée d'un revêtement déposé par toute technique connue appropriée. Dans ce cas, la portion externe peut faire partie intégrante de la masse, ou être réalisée indépendamment de la portion de liaison et de la masse. Toutefois, il est particulièrement intéressant que les deux portions fassent partie d'un même revêtement entourant la masse. Le revêtement est avantageusement en matériau thermodurcissable ; la résine époxy est apparue être particulièrement bien adaptée. La portion de liaison et/ou la portion externe peuvent avoir de faibles épaisseurs éventuellement inférieures ou égales à 100 microns environ. En variante, il peut s'agir d'une matière plastique thermoplastique.

Pour faciliter la pose du dispositif d'équilibrage, sa portion de liaison, plane, concave ou convexe, est avantageusement préencollée.

Un tel dispositif est au moins aussi pratique à utiliser que les dispositifs classiques en plomb, de sorte qu'une roue qui en est équipée peut être en pratique précisément équilibrée à l'aide d'un seul dispositif d'équilibrage sur chaque flanc.

Selon d'autres caractéristiques préférées de la roue selon l'invention, éventuellement combinées:
- le dispositif d'équilibrage est disposé le long d'un flanc du pneumatique, à proximité de la jante.
- le dispositif est disposé radialement entre la jante et une portion de largeur maximale du pneumatique.
- le dispositif d'équilibrage longe radialement intérieurement un épaulement du pneumatique.
- le dispositif d'équilibrage longe radialement extérieurement un épaulement du pneumatique.
- le dispositif d'équilibrage est engagé dans une gorge circonférentielle ménagée dans le pneumatique.
- le dispositif d'équilibrage est engagé dans une gorge circonférentielle ménagée par le pneumatique et un rebord de la jante.

Des objets, caractéristiques et avantages de l'invention ressortent de la description qui suit, donnée à titre d'exemple illustratif non limitatif en regard des dessins annexés sur lesquels :
- la figure 1 est une vue en élévation d'une roue conforme à l'invention,
- la figure 2 en est une vue en coupe transversale de la partie haute de cette roue,
- la figure 3 est une vue en coupe transversale de la partie haute d'un autre exemple de réalisation d'une roue conforme à l'invention,
- la figure 4 est une vue en élévation de cette partie haute avec une variante de réalisation du dispositif d'équilibrage,
- la figure 5 est une vue en coupe transversale de la partie haute d'encore un autre exemple de réalisation de roue conforme à l'invention,
- la figure 6 est une vue en élévation de cette partie haute avec une variante de réalisation du dispositif d'équilibrage,
- la figure 7 est une vue en coupe transversale de la partie haute d'un quatrième exemple de réalisation de roue conforme à l'invention,
- la figure 8 est une vue en élévation de cette partie haute avec une variante de réalisation du dispositif d'équilibrage,
- la figure 9 est une vue en coupe transversale de la partie haute d'un cinquième exemple de réalisation de roue conforme à l'invention,
- la figure 10 est une vue en élévation de cette partie haute avec une variante de réalisation du dispositif d'équilibrage,
- la figure 11 est une vue en coupe transversale d'un premier dispositif d'équilibrage selon l'invention,
- la figure 12 est une vue en coupe transversale d'un second dispositif d'équilibrage selon l'invention,
- la figure 13 est une vue en coupe transversale d'un troisième dispositif d'équilibrage selon l'invention,
- la figure 14 est une vue schématique en perspective d'un dispositif d'équilibrage en train d'être encollé,
- la figure 15 en est une vue de bout,
- la figure 16 est une vue schématique en perspective d'un second dispositif d'équilibrage dont une face a été préencollée,
- la figure 17 en est une vue de bout,
- la figure 18 est une vue schématique en perspective d'un troisième dispositif d'équilibrage muni d'un ruban d'adhésif.

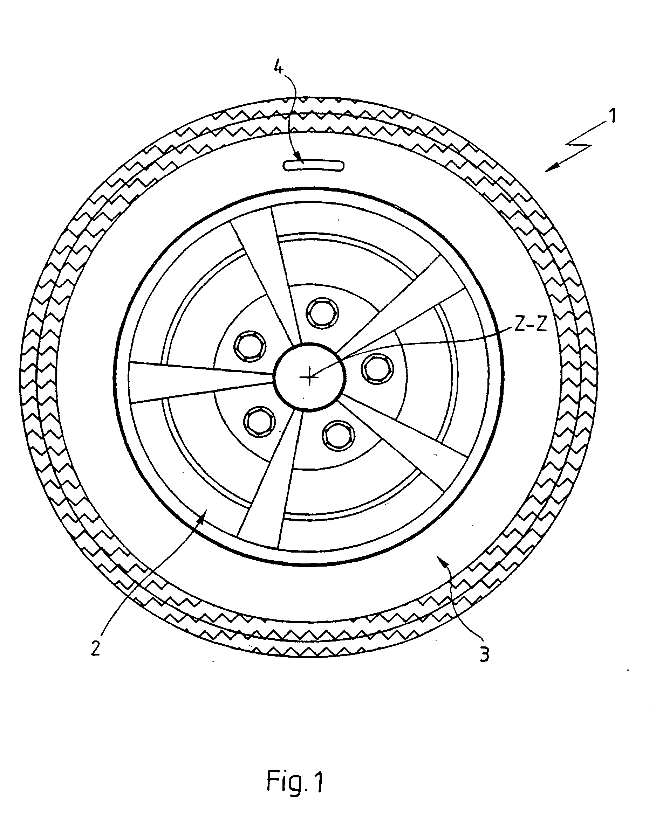

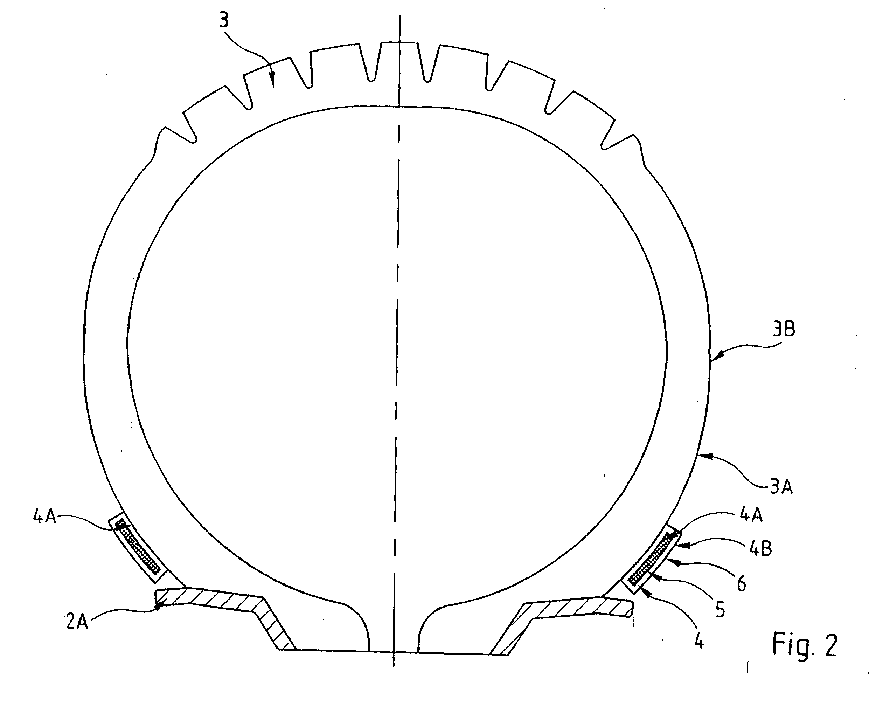

Les figures 1 et 2 représentent une roue 1 comportant une jante 2 adaptée à tourner autour d'un axe de rotation Z-Z et un pneumatique 3 engagé autour de cette jante. Ce pneumatique est de tout type adapté à équiper une roue de véhicule. Ce pneumatique est muni sur chacun de ses flancs 3A d'un dispositif d'équilibrage 4. Il peut bien sûr n'y avoir qu'un seul dispositif d'équilibrage, sur un seul flanc.

Ce dispositif 4 est ici à distance du rebord 2A de la jante sur lequel sont classiquement fixés les poids d'équilibrage ; il est toutefois de préférence disposé radialement entre cette jante et la partie 3B du pneumatique qui a une largeur maximale. Cela a notamment pour avantage de garder le dispositif d'équilibrage à proximité de la jante et de garantir que les efforts centrifuge en service seront en partie repris par cette partie renflée 3B du pneumatique.

Ce dispositif d'équilibrage 4 comporte essentiellement une masse d'équilibrage 5 munie, sur toute sa surface, d'un revêtement 6 dont le matériau constitutif a une couleur sensiblement identique à celle du matériau constitutif du pneumatique (son épaisseur est très exagérée sur les dessins). Ainsi ce dispositif comporte une zone de liaison (portion du revêtement longeant le pneumatique et collée à celui-ci) et une portion externe (le reste du revêtement).

Le matériau constitutif du poids 5 est de préférence du plomb classique (plomb ou alliage de plomb) mais peut aussi être une autre matière telle qu'acier, fonte, alliage de zinc et d'aluminium de type zamak, alliage ferreux ou non ferreux, voire même plastique (exemple polypropylène...).

Le revêtement a une épaisseur qui est de préférence sensiblement constante (par exemple de l'ordre de 100 microns voire moins, par exemple 70 microns) de sorte que la forme du poids détermine sensiblement celle du dispositif d'équilibrage.

La géométrie des poids 5 peut être celle des poids actuels.

Pour une bonne adéquation du bloc 4 sur le pneumatique, celui-ci peut :
. être globalement en arc de cercle pour suivre la forme arrondie du rebord de la jante (figure 1) ; et/ou
. avoir une face 4A concave, destinée à longer le pneumatique, de manière à suivre la forme arrondie du flanc de pneumatique (figure 2).

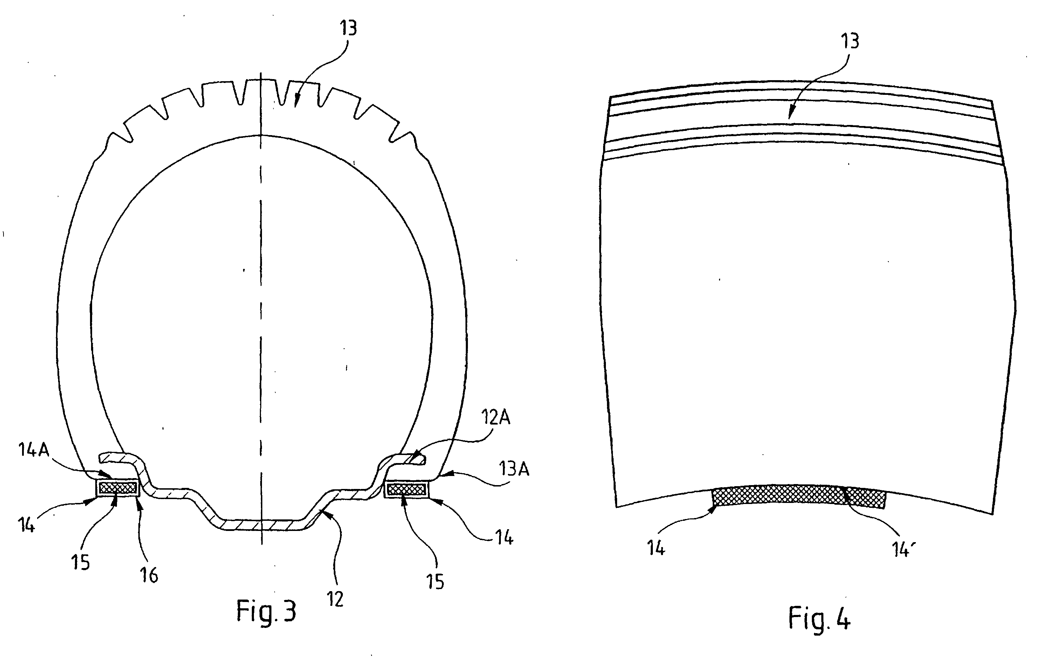

Dans l'exemple des figures 3 et 4 le dispositif d'équilibrage repéré 14 ou 14' longe intérieurement un rebord 13A du pneumatique 13, disposé radialement à l'intérieur du rebord 12A de la jante 12 ; dans ce cas la zone de liaison du poids 15 a avantageusement une face convexe parallèle à une surface convexe 14A du bloc longeant le pneumatique, tandis que la face opposée (figure 4) peut être droite (en fait, la géométrie de cette face opposée importe peu). Il y a ici deux dispositifs d'équilibrage, disposés sur les deux rebords internes du pneumatique.

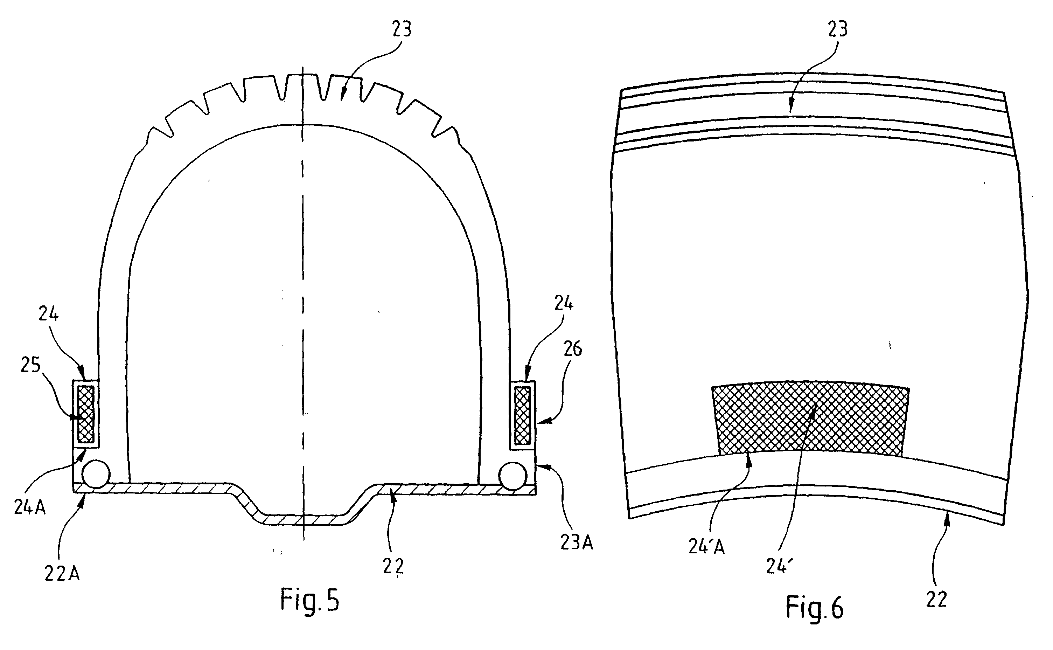

Dans l'exemple des figures 5 et 6, où chaque dispositif d'équilibrage 24 ou 24' est disposé radialement à l'extérieur d'un épaulement 23A du pneumatique 23, radialement à l'extérieur du rebord 22A de la jante 22, la zone de liaison du poids 25 a avantageusement une surface concave parallèle à une surface concave 24A du bloc destinée à suivre la forme convexe de l'épaulement du pneumatique ; la géométrie de la portion externe (opposée) du poids (à la figure 6) peut être quelconque, par exemple convexe ou plane, notamment. Il y a ici aussi deux dispositifs d'équilibrage des deux côtés du plan de la roue.

Dans les exemples précités, l'implantation du dispositif d'équilibrage est faite dans une zone disponible du pneumatique, sans que celui-ci ait été nécessairement conçu pour recevoir des dispositifs d'équilibrage selon l'invention. Toutefois, l'invention peut admettre des adaptations spécifiques des pneumatiques.

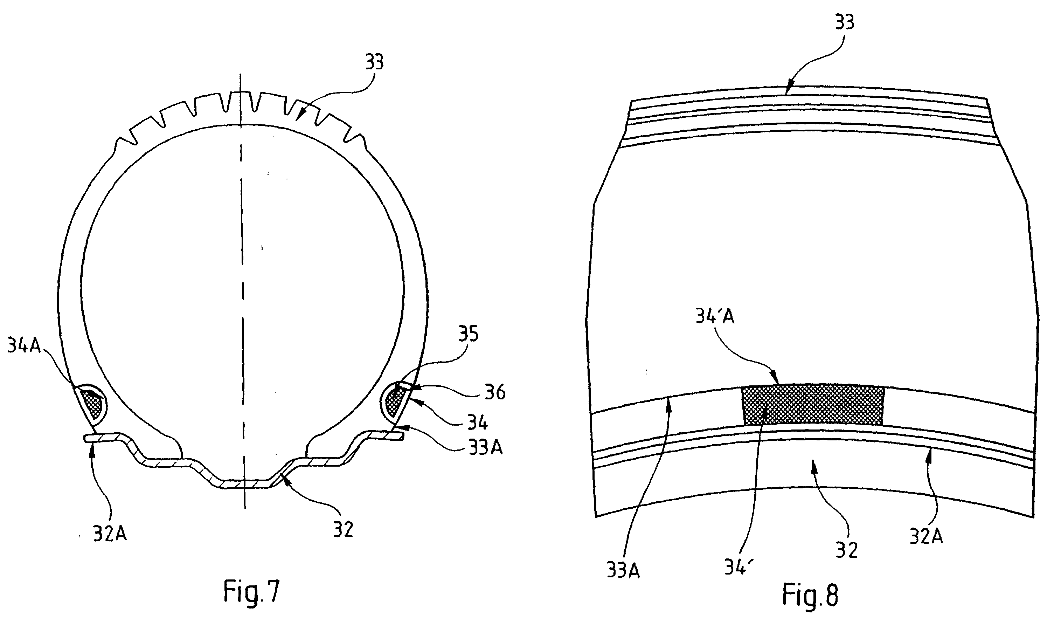

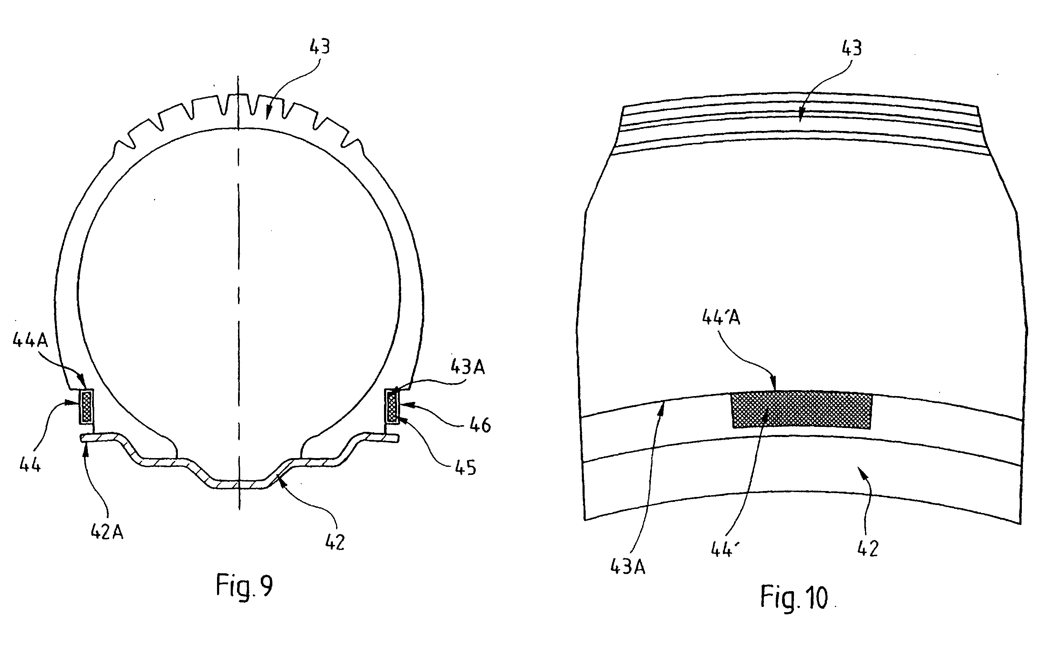

Dans les figures 7 à 10, le dispositif d'équilibrage 34 ou 34' (aux figures 7 et 8) ou 44 ou 44' (aux figures 9 et 10) est engagé dans un dégagement 33A ou 43A du pneumatique 33 ou 43 prévu à cet effet, ici radialement à l'extérieur du rebord libre 32A ou 42A de la jante 32 ou 42. Aux figures 7 et 8 le dispositif 34 ou 34' est une portion de bourrelet engagée en tout ou partie dans une gorge circonférentielle 33A du pneumatique 33 ; c'est une pièce arquée (figure 8) dont la zone de liaison 34A est fortement courbée (figure 7), au moins approximativement en portion de cylindre (ici sensiblement un demi-cylindre) destinée à suivre la surface interne de la gorge 33A. Aux figures 9 et 10 le dispositif 44 est une pièce arquée reçue dans un dégagement 43A du pneumatique 43 définissant une gorge avec le rebord 42A de la jante ; le dispositif d'équilibrage 44 n'occupe pas toute la section de cette gorge, restant à distance de ce rebord 42A. La portion de liaison a une forme arquée avec une face 44A convexe destinée à longer intérieurement l'épaulement que présente le pneumatique à l'opposé du rebord 42A (comme dans le cas des figures 3 et 4 la tranche radialement interne du poids peut être quelconque, concave ou plane, notamment). Comme précédemment, un dispositif d'équilibrage peut être prévu du côté interne et/ou externe de la roue, selon l'endroit où le pneumatique a été aménagé à cet effet.

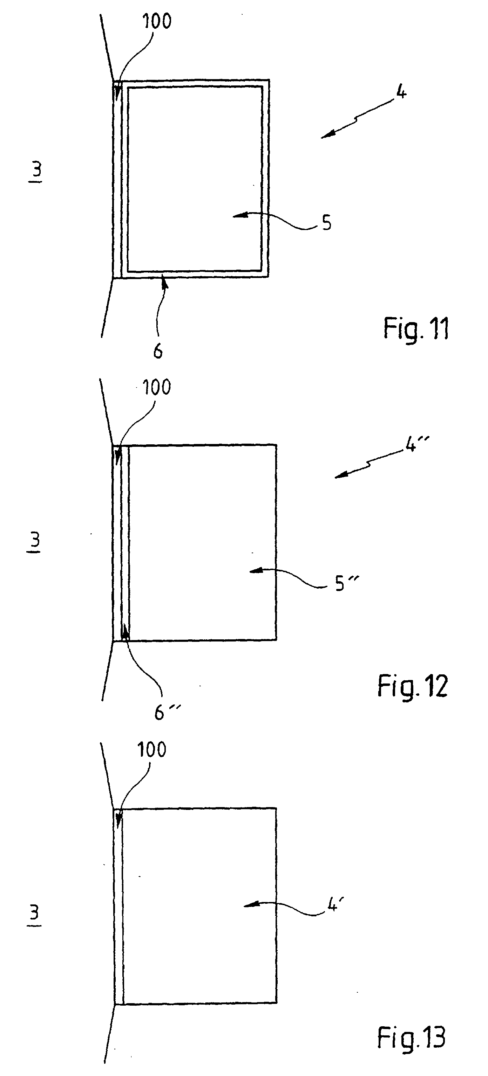

Les figures 11 à 13 montrent en détail trois variantes de dispositif d'équilibrage.

Celle de la figure 11 correspond aux références 4, 14, 24, 34 et 44 précitées, avec une masse d'équilibrage dont la portion de liaison et la portion externe sont constituées par un revêtement. Ce sont les références des figures 1 et 2 qui sont utilisées ici : masse d'équilibrage 5, revêtement 6, pneu 3, couche de colle 100.

La figure 12 représente un dispositif 4" qui diffère de celui de la figure 11 par le fait que la portion externe (visible) fait partie intégrante de la masse d'équilibrage (la portion de liaison 6" est donc un revêtement déposé sur une partie seulement de la surface extérieure de la masse d'équilibrage).

La figure 13 est un autre dispositif 4' dont aussi bien la portion de liaison que la portion externe font partie intégrante de la masse d'équilibrage.

En variante non représentée, seule la portion de liaison peut faire partie de la masse d'équilibrage.

En pratique, comme avec les poids d'équilibrage connus, la forme et les dimensions transversales (dans un plan de la roue) peuvent être données et les différences de poids sont obtenues par des différences d'épaisseur (parallèlement à l'axe de rotation). En variante, on peut procéder inversement, en faisant varier la dimension circonférentielle, voire même en faisant varier plusieurs dimensions.

La procédure d'équilibrage commence par le choix d'un dispositif de poids capable de compenser le balourd constaté sur la roue considérée (des appareils existent à cet effet pour les poids classiques et peuvent aisément être aménagés en fonction de la distance à l'axe à laquelle on prévoit de fixer les dispositifs d'équilibrage sur le pneumatique.

Le nombre de dispositifs d'équilibrage à mettre en place lors de l'équilibrage d'une roue est de un par flanc de pneumatique ; la liaison du dispositif d'équilibrage à la roue est assurée par la portion de liaison, qui après collage garantit que la fixation résistera à des contraintes importantes, sans avoir à se préoccuper de la densité du poids d'équilibrage.

Le choix du matériau constituant la portion de liaison est fonction de la "tension de surface" de ce matériau, qui doit être élevée, de manière à obtenir un collage d'une efficacité maximale.

La portion de liaison peut être :
- de la peinture en poudre thermodurcissable de type époxy par exemple, ce qui permet par poudrage électrostatique et cuisson, une bonne solidarisation entre ladite surface et le poids d'équilibrage en plomb par exemple ou dans une autre matière.
   Dans ce cas, la surface peut se limiter au seul contact avec le pneumatique, ou bien recouvrir une partie ou la totalité du poids d'équilibrage. L'épaisseur moyenne de la surface est d'environ 70µm.
- ou bien en matière plastique de type polyéthylène etc. ... ce qui permet dans ce cas d'avoir des poids d'équilibrage directement dans une matiere plastique.

La condition de choisir pour le dispositif d'équilibrage un matériau ayant sensiblement la même couleur que le pneumatique ne pose à cet égard aucun problème, les matières plastiques et poudre époxy pouvant sans problème être de couleur quelconque (noir, vert, blanc ou autre).

La préparation de la portion de liaison peut être un encollage, de sorte que le dispositif d'équilibrage est aisément mis en place par mise à l'air de la surface encollée et application contre une zone appropriée au pneumatique (en pratique un flanc).

Une manière d'obtenir une adhésion optimale, est de s'assurer que les surfaces du pneumatique et du bloc sont propres et sèches :
- un grattage préalable de la surface du pneumatique permet de "réactiver" le caoutchouc ;
- puis les surfaces sont nettoyées avec un solvant, par exemple de l'heptane ; il peut aussi s'agir d'un mélange d'alcool isopropylique et d'eau, etc
- la fixation du bloc sur le pneumatique peut être réalisée par de la colle (par exemple du type cyanoacrylate), par exemple celle vendue par LOCTITE sous la référence 406.

L'aptitude d'un substrat au collage se caractérise par sa "mouillabilité" : plus le substrat "mouille", meilleure est l'adhérence, laquelle se traduit par la tension de surface qui s'exprime en dyne. Plus la dyne est élevée, plus il y a adhérence ; pour une bonne adhérence, il faut en pratique des valeurs supérieures à 40. Exemples:
- poudre époxy supérieure à 45
- plastique ABS 60 à 70

Le polyéthylène et le polypropylène sont a priori difficiles à coller (10 à 15). En revanche il est possible d'augmenter cette valeur en modifiant la tension de surface de ces matériaux :
- par effet "corons" : courant électrique en surface pour modifier la tension de surface et augmenter le collage ;
- par "flammage" : flamme légère en surface.

En fait. lorsque le dyne est bas, le collage devient aléatoire sans être nécessairement mauvais.

Lors d'un équilibrage ultérieur, il suffit de rééquilibrer la roue à l'aide d'un nouveau dispositif d'équilibrage et laisser les dispositifs existants.

Si l'emplacement du nouveau dispositif coïncide avec le dispositif existant, il faudra faire glisser légèrement le pneumatique autour de la jante, (pratique très connue et couramment effectuée) et recommencer la procédure d'équilibrage.

Ainsi il peut y avoir plusieurs dispositifs d'équilibrage sur chaque flanc de pneumatique, même si cela n'est pas souhaité.

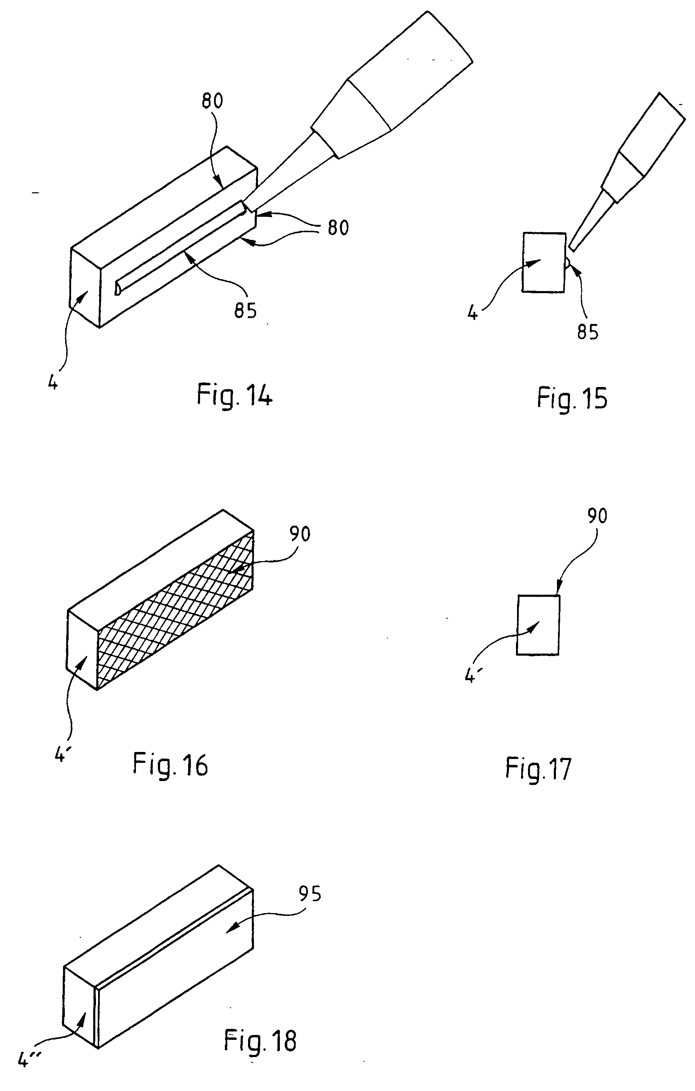

Les figures 14 et 15 montrent un bloc ou dispositif d'équilibrage 4 selon l'invention en train d'être encollé avec de la colle 85 juste avant collage contre la surface correspondante d'un pneumatique. En variante représentée aux figures 16 et 17 le bloc 4' est préencollé lors de sa fabrication et, lorsqu'on souhaite le solidariser à un pneumatique, on dégage un éventuel film de protection pour libérer la couche de colle fortement adhésive 90. La figure18 décrit une autre variante où l'encollage de la surface de fixation du bloc 4" a consisté à mettre un ruban 95, par exemple revêtu sur ses deux faces d'un adhésif thermoréactivable ; après dégagement d'un éventuel film de protection il suffit de réactiver l'adhésif.

En variante, le couche d'adhésif 90 ou le ruban 95 peuvent être mis en place au dernier moment.

Le bloc ainsi encollé (selon l'une quelconque des variantes présentées à propos des figures 14 à 18) est positionné ensuite sur le pneumatique à l'endroit désiré, avec une mise en pression de quelques secondes. La procédure d'équilibrage est alors terminée.

En règle générale, dans les exemples représentés, le poids et donc le bloc d'équilibrage ont une forme globalement parallélépipédique éventuellement arquée, sauf dans le cas des figures 7 et 8. La solidarisation au pneumatique peut se faire, selon les cas, sur une seule face (figures 2 à 4), sur deux faces (figures 5, 6, 9 et 10) ou une surface à forte courbure dans un plan contenant l'axe de rotation (figures 7 et 8), pouvant être une surface semi-cylindrique (éventuellement arquée pour suivre la circonférence du pneumatique).

Les dispositifs d'équilibrage selon l'invention conviennent parfaitement aux pneumatiques existants et peuvent sans difficulté s'adapter aux pneumatiques actuellement en cours de développement et qui font l'objet de nouveaux modes de fixation sur la jante (exemple : pneumatique à accrochage vertical).

## Revendications

1. Dispositif d'équilibrage (4) pour roue (1) comportant une masse unique d'équilibrage (5), une portion de liaison en matière plastique (4A) solidaire de cette masse et adaptée à être solidarisée par collage à un pneumatique (3), et une portion externe (4B) solidaire de la masse et réalisée en un matériau ayant une couleur similaire à celle de ce pneumatique.

2. Dispositif selon la revendication 1, **caractérisé en ce que** cette portion de liaison fait partie intégrante de la masse d'équilibrage.

3. Dispositif selon la revendication 2, **caractérisé en ce que** la portion externe fait partie intégrante de cette masse d'équilibrage.

4. Dispositif selon la revendication 2 ou 3, **caractérisé en ce que** la portion de liaison et la masse d'équilibrage sont en un matériau thermoplastique.

5. Dispositif selon la revendication 4, **caractérisé en ce que** le matériau thermoplastique est un terpolymère de type ABS.

6. Dispositif selon la revendication 1, **caractérisé en ce que** la portion de liaison est un revêtement déposé sur au moins une face de la masse d'équilibrage.

7. Dispositif selon la revendication 6, **caractérisé en ce que** la portion externe est une portion du même revêtement.

8. Dispositif selon la revendication 6 ou la revendication 7, **caractérisé en ce que** le revêtement est en un matériau thermodurcissable.

9. Dispositif selon la revendication 8, **caractérisé en ce que** le matériau thermodurcissable est une résine époxy.

10. Dispositif selon l'une quelconque des revendications 6 à 9, **caractérisé en ce que** le revêtement a une épaisseur d'au plus l'ordre de 100 microns.

11. Dispositif selon l'une quelconque des revendications 1 à 10, **caractérisé en ce que** la portion de liaison est préencollée.

12. Roue (1) comportant une jante (2) ayant un axe (Z-Z), un pneumatique (3) et un dispositif d'équilibrage (4) selon l'une quelconque des revendications 1 à 11, comportant une masse unique d'équilibrage (5), une portion de liaison en matière plastique (4A) solidaire de cette masse et solidarisée par collage au pneumatique, et une portion externe (4B) réalisée en un matériau ayant une couleur similaire à celle de ce pneumatique.

13. Roue selon la revendication 12, **caractérisée en ce qu'**il y a au plus un dispositif d'équilibrage par flanc du pneumatique.

## Patentansprüche

1. Ausgleichsvorrichtung (4) für ein Rad (1), mit einer eindeutig bestimmten Ausgleichsmasse (5), einem mit der Masse fest verbundenen Verbindungsteil (4A) aus Kunststoff, welches durch Kleben mit einem Reifen (3) zu verbinden ist, und einem mit der Masse fest verbundenen Außenteil (4B), welches aus einem Material hergestellt ist, das eine Farbe hat, die der des Reifens entspricht.

2. Vorrichtung nach Anspruch 1, **dadurch gekennzeichnet, dass** das Verbindungsteil integrierter Bestandteil der Ausgleichsmasse ist.

3. Vorrichtung nach Anspruch 2, **dadurch gekennzeichnet, dass** das Außenteil integrierter Bestandteil der Ausgleichsmasse ist.

4. Vorrichtung nach Anspruch 2 oder 3, **dadurch gekennzeichnet, dass** das Verbindungsteil und die Ausgleichsmasse aus einem thermoplastischen Material sind.

5. Vorrichtung nach Anspruch 4, **dadurch gekennzeichnet, dass** das thermoplastische Material ein Terpolymer des Typs ABS ist.

6. Vorrichtung nach Anspruch 1, **dadurch gekennzeichnet, dass** das Verbindungsteil eine auf mindestens einer Fläche der Ausgleichsmasse aufgebrachte Beschichtung ist.

7. Vorrichtung nach Anspruch 6, **dadurch gekennzeichnet, dass** das Außenteil ein Teil derselben Beschichtung ist.

8. Vorrichtung nach Anspruch 6 oder nach Anspruch 7, **dadurch gekennzeichnet, dass** die Beschichtung aus einem warmaushärtbaren Material ist.

9. Vorrichtung nach Anspruch 8, **dadurch gekennzeichnet, dass** das warmaushärtbare Material ein Epoxidharz ist.

10. Vorrichtung nach einem der Ansprüche 6 bis 9, **dadurch gekennzeichnet, dass** die Beschichtung eine Dicke von mehr als 100 Mikrometern hat.

11. Vorrichtung nach einem der Ansprüche 1 bis 10, **dadurch gekennzeichnet, dass** das Verbindungsteil eingeklebt ist.

12. Rad (1) mit einer Felge (2) mit Achse (Z-Z), einem Reifen (3) und einer Ausgleichsvorrichtung (4) nach einem der Ansprüche 1 bis 11, die eine eindeutig bestimmte Ausgleichsmasse (5), ein mit der Masse fest verbundenes Verbindungsteil (4A) aus Kunststoff, welches durch Kleben mit dem Reifen (3) verbunden ist, und ein mit der Masse fest verbundenes Außenteil (4B) aufweist, welches aus einem Material hergestellt ist, das eine Farbe hat, die der des Reifens entspricht.

13. Rad nach Anspruch 12, **dadurch gekennzeichnet, dass** pro Flanke des Reifens mindestens eine Ausgleichsvorrichtung vorgesehen ist.

## Claims

1. Balancing device (4) for a wheel (1), comprising a single balancing weight (5), a linking portion made of a plastic material (4A) integral with this weight and capable of being incorporated with a tyre (3) by bonding, and an external portion (4B) integral with the weight and made of a material having a similar colour to that of this tyre.

2. Device according to claim 1, **characterized in that** the linking part is integral with the balancing weight.

3. Device according to claim 2, **characterized in that** the external portion is integral with this balancing weight.

4. Device according to claim 2 or 3, **characterized in that** the linking portion and the balancing weight are made of a thermoplastic material.

5. Device according to claim 4, **characterized in that** the thermoplastic material is a terpolymer of ABS type.

6. Device according to claim 1, **characterized in that** the linking portion is a coating deposited on at least one surface of the balancing weight.

7. Device according to claim 6, **characterized in that** the external portion is a portion of the same coating.

8. Device according to claim 6 or claim 7, **characterized in that** the coating is made of a thermosetting material.

9. Device according to claim 8, **characterized in that** the thermosetting material is an epoxy resin.

10. Device according to any one of claims 6 to 9, **characterized in that** the coating has a maximum thickness of the order of 100 microns.

11. Device according to any one of claims 1 to 10, **characterized in that** the linking portion is pre-coated with glue.

12. Wheel (1) comprising a rim (2) having an axle (Z-Z), a tyre (3) and a balancing device (4) according to any one of claims 1 to 11, comprising a single balancing weight (5), a linking portion made of a plastic material (4A) integral with this weight and incorporated with the tyre by bonding, and an external portion (4B) made of a material having a similar colour to that of this tyre.

13. Wheel according to claim 12, **characterized in that** there is at most one balancing device per side of the tyre.
